Europäisches Patentamt

European Patent Office

Office européen des brevets

(19)

(11) Publication number : **0 508 822 A2**

# EUROPEAN PATENT APPLICATION

(12)

(21) Application number : **92303248.6**

(22) Date of filing : **10.04.92**

(51) Int. Cl.⁵ : **G01C 21/20**

(30) Priority : **12.04.91 JP 79883/91**

(43) Date of publication of application :
**14.10.92 Bulletin 92/42**

(84) Designated Contracting States :
**DE FR GB**

(71) Applicant : **PIONEER ELECTRONIC CORPORATION**
**No. 4-1, Meguro 1-chome**
**Meguro-ku Tokyo 153 (JP)**

(72) Inventor : **Nobe, Kenichi, c/o Pioneer Electronic Corp.**
**Kawagoe Works, 25-1, Aza Nishimachi Oaza Yamada, Kawagoe-shi, Saitama (JP)**
Inventor : **Araki, Morio, c/o Pioneer Electronic Corp.**
**Kawagoe Works, 25-1, Aza Nishimachi Oaza Yamada, Kawagoe-shi, Saitama (JP)**
Inventor : **Arakawa, Takeharu, c/o Pioneer Electronic Corp.**
**Kawagoe Works, 25-1, Aza Nishimachi Oaza Yamada, Kawagoe-shi, Saitama (JP)**

(74) Representative : **Brunner, Michael John**
**GILL JENNINGS & EVERY 53-64 Chancery Lane**
**London WC2A 1HN (GB)**

(54) **Vehicular navigation apparatus.**

(57) In a navigation system, a destination (Td) and route positions (T1...Tm) are set in advance. Directions ($\theta_m$) to be followed at the respective route positions to reach the next route position or destination are calculated, and stored in a RAM (9) in association with data ($x_m, y_m$) indicating the respective route positions. Based on the stored data, the calculated directions are indicated (P1...Pm) at respective route positions (T1...Tm) on a display map (17).

FIG. 1

EP 0 508 822 A2

Jouve, 18, rue Saint-Denis, 75001 PARIS

The present invention relates to a vehicular navigation apparatus.

In vehicular navigation apparatuses, map data including road data, which are obtained by converting respective positions of roads into numerals, are stored in advance in a memory medium such as a CD-ROM. While a present position of the own vehicle is recognized, map data of an area including the present position is read from the recording medium to be used for displaying a map of that area on a display. Further, the present position of the own vehicle is automatically indicated on the map. An example of such apparatuses is disclosed in Japanese Patent Application Unexamined Publication No. Sho. 63-12096.

In such vehicular navigation apparatuses, coordinate data of a start position, destination, and at least one arbitrary position (hereinafter referred to as "route position") on a route from the start position to destination are received in advance, and these positions are indicated on the map. With this construction, a driver, recognizing his vehicle's passage of each route position, can drive toward the destination. However, since an area shown on the display is usually small, it may be the case that only one route position is indicated in the displayed area including the present position of the own vehicle and the other route positions and destination are not displayed. For example, as shown in Fig. 8 in which on a map (roads are indicated by solid lines) the own vehicle indicated by character A is going along an established route toward a destination E via route positions B, C and D, only a partial area enclosed by the dashed line is actually shown on the display. Even the route position B is displayed, a driver may not understand what direction to go along from the route position B to reach the next route position C since the route position B is located at a crossing. Further, specifically in an apparatus of the type indicating a direction from the vehicle position A to the destination E by arrow F, erroneous guidance to instruct the driver to make a right turn at the route position B along arrow G will be performed.

An object of the present invention is to provide a vehicular navigation apparatus which can provide proper guidance indication at any route position on a displayed map.

According to the invention, a vehicular navigation apparatus comprises:

means for receiving data indicating a destination and data indicating at least one route position located on a route from a start position to the destination;

means for obtaining data indicating directions to be followed at the respective route positions to reach the next route position or destination;

means for storing the direction data in association with the respective route position data; and

means for displaying the directions at the respective route positions on a map picture based on the stored direction data and the route position data.

BRIEF DESCRIPTION OF THE DRAWINGS

Fig. 1 is a block diagram showing a vehicular navigation apparatus according to an embodiment of the present invention;
Fig. 2 is a flowchart showing a route setting routine;
Fig. 3 shows a position setting data table;
Fig. 4 is a flowchart showing a position indicating routine;
Fig. 5 is an example of a picture appearing on a display;
Fig. 6 is a flowchart showing a guidance indication routine;
Fig. 7 is a flowchart showing part of another example of a route setting routine; and
Fig. 8 shows an example of a picture appearing on a display in a conventional apparatus.

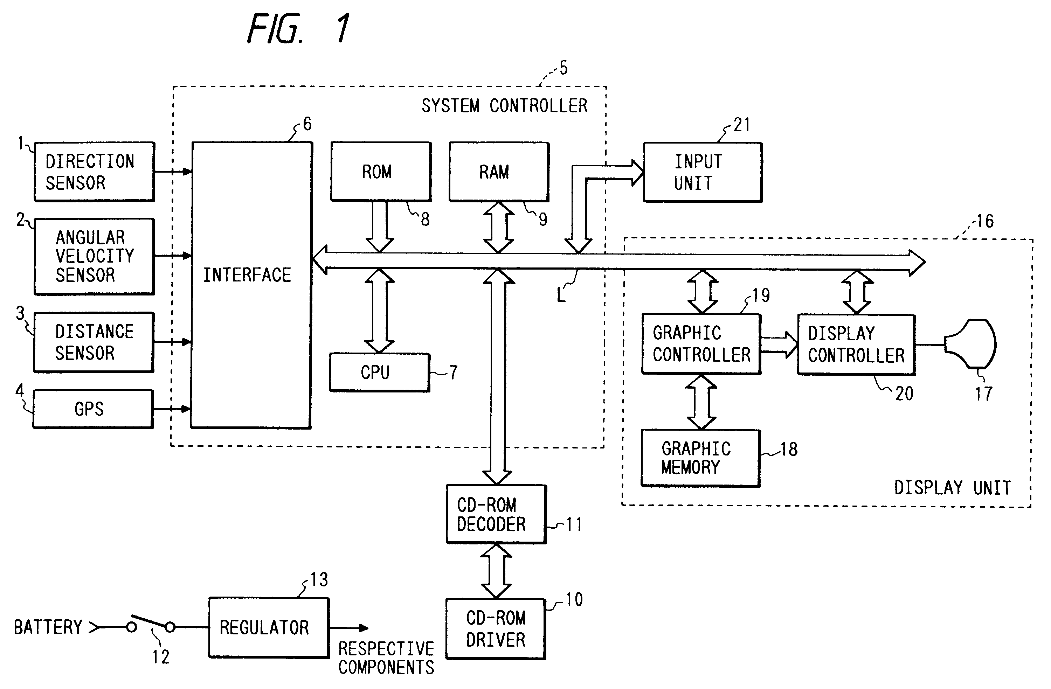

Fig. 1 is a block diagram showing a vehicular navigation apparatus according to an embodiment of the present invention. A direction sensor 1 detects a running direction of a vehicle, an angular velocity sensor detects an angular velocity of the vehicle, and a distance sensor 3 detects a running distance of the vehicle. A GPS (global positioning system) device 4 detects an absolute position of the vehicle based on transmitted longitude and latitude information, etc. Detection outputs from these devices (sensors) are provided to a system controller 5. The direction sensor 1 is, for instance, a geomagnetism sensor which detects the running direction of the vehicle based on geomagnetism. The distance sensor is a known pulse generator which generates a pulse every predetermined rotation of a drive shaft of the vehicle by detecting a rotational angle of the drive shaft magnetically or optically.

The system controller 5 has the following components. An interface 6 receives the detection outputs from the devices (sensors) 1-4, and performs A/D conversion and other processing on the received signals. A CPU 7 performs various kinds of image data processing and computation of running distance, running direction, coordinates (longitude and latitude) of a present position of the vehicle, etc. based on the output data sent from the devices (sensors) 1-4 via the interface 6. Programs of various kinds of processing performed by the CPU 7 and other necessary information are written in a ROM 8 in advance. Information necessary for executing a program is written in and read from a RAM 9. The RAM 9 is backed up by supplying a regulated output voltage of a vehicle battery (not shown) so that data such as longitude and latitude data, direction data, direction-indicating pattern data and position setting flag, which are described later, will not be gone when the navigation apparatus is disconnected from the battery.

A read-only nonvolatile memory medium, e.g., a CD-ROM is used as an external memory medium. Other nonvolatile memory media such as a DAT and IC card may also be used as the external memory medium. Stored in advance in the CD-ROM, in addition to map data prepared by digitizing (converting into numerals) respective points of roads on maps, are: service list display data, detail display data, longitude and latitude data as position coordinate data and position-indicating pattern data, which are described later. Information stored in the CD-ROM is read by a CD-ROM driver 10. A reading output from the CD-ROM driver 10 is decoded by a CD-ROM decoder 11 and sent out to a bus line L.

An output voltage of the vehicle battery is provided to a regulator 13 via an accessory switch 12, and a regulated voltage is supplied to the respective components. A power to the RAM 9 is regulated by a regulator (not shown) other than the regulator 13, without passing through the accessory switch 12.

While the vehicle is running, the CPU 7 calculates the vehicle running direction based on, e.g., the output data of the direction sensor 1 every predetermined period in response to a timer interruption, and also calculates the longitude and latitude data (i.e., coordinate data of a vehicle present position) based on, e.g., the running distance and direction in response to an interruption which occurs every predetermined running distance based on the output data of the distance sensor 3. Further, the CPU 7 reads, from the CD-ROM, data of a map of an area including the present position coordinates, and temporarily stores that data in the RAM 9 and then provides the same to a display unit 16.

The display unit 16 consists of the following components. A display 17 is, for instance, a CRT. A graphic memory 18 is, for instance, a V-RAM (video RAM). A graphic controller 19 stores (draws), as image data, the map data from the system controller 5 into the graphic memory 18, and also outputs this data. A display controller 20 performs a control operation to display the map on the display 17 based on the image data from the graphic controller 19.

An input unit 21 is, for instance, a keyboard, and provides various instructions etc. to the system controller 5 in response to key manipulation by a user.

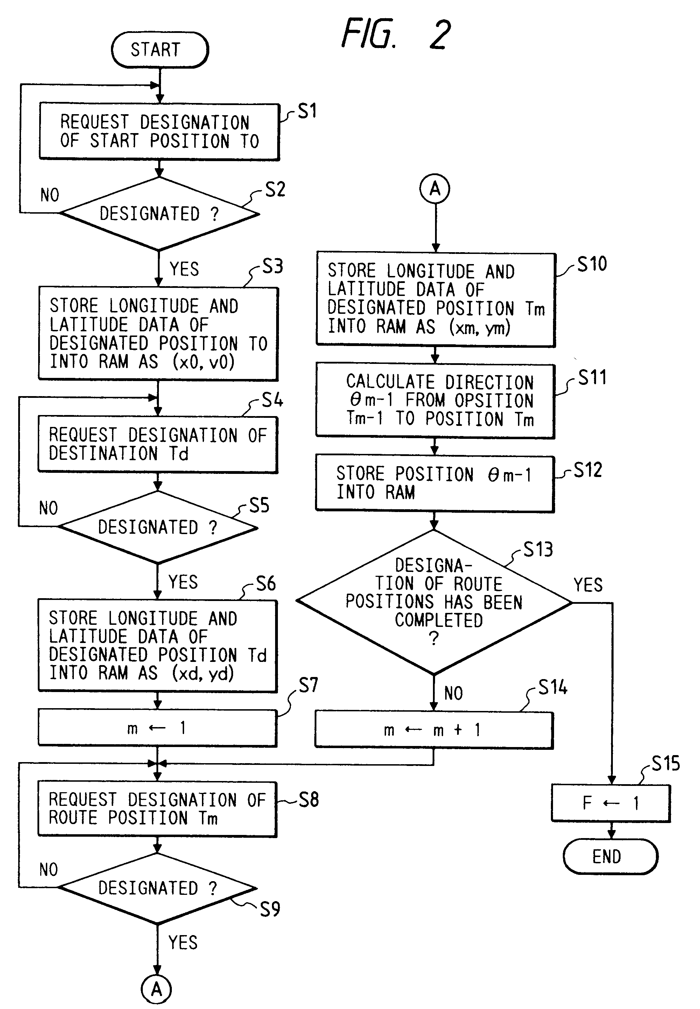

Next, a procedure of setting a start position, route positions and destination, which is executed by the CPU 7, is described in terms of a route setting routine which is shown in a flowchart of Fig. 2. It is assumed here that the route setting routine is called and executed upon its selection by a user's key manipulation of the input unit 21 during execution of a main routine (not shown) which includes the process of, recognizing a vehicle present position based on, e.g., the respective outputs of the sensors 1 and 3, reading out from the CD-ROM data of a map of an area including the present position to display the map on the display 17, and the process of indicating the present position of the own vehicle on the map. It is noted that the operation of recognizing the present position is continued even after the route setting routine is called.

In the route setting routine shown in Fig. 2, in step S1, the CPU 7 first requests designation of a start position T0. This is done, for instance, by displaying a map on the display 17 and further displaying, together with the map, a message of requesting designation of a start position TO on the map using a cursor by key manipulation of the input unit 21. In step S2, it is judged whether a start position TO has been designated. If the judgment is affirmative, in step S3 the CPU 7 obtains the longitude and latitude data of the designated position TO from the map data, and stores the same into the RAM 9 as data $(x0, y0)$. After execution of step S3, the CPU 7 requests designation of a destination Td in step S4. This is done by, for instance, displaying a map on the display 17 and further displaying, together with the map, a message of requesting designation of a destination Td on the map using a cursor by key manipulation of the input unit 21. The number d has a fixed initial value. Its final value is a maximum value of a variable m (described later) plus one, and is related to the capacity of the RAM 9. In step S5, it is judged whether a destination Td has been designated. If the judgment is affirmative, in step S6 the CPU 7 obtains longitude and latitude data of the designated position Td from the map data, and stores the same into the RAM 9 as data $(xd, yd)$. Then, the CPU 7 sets the variable m at "1" in step S7, and requests designation of a route position Tm in step S8. This done, for instance, by displaying a map on the display 17 and further displaying, together with the map, a message of requesting designation of a route position Tm (in the order from the start position side) on the map using a cursor by manipulation of the input unit 21. In step S9, it is judged whether a route position Tm has been designated. If the judgment result is affirmative, in step S10, the CPU 7 obtains longitude and latitude data of the designated position Tm from the map data, and stores the same into the RAM 9 as data $(xm, ym)$. Then, the CPU 7 calculates, in step S11, a direction $\theta m-1$ from the position Tm-1 to the position Tm based on the longitude and latitude data $(xm, ym)$ and $(xm-1, ym-1)$, and stores the calculated direction $\theta m-1$ into the RAM 9 in step S12. The direction $\theta m-1$ may be calculated in accordance with the method disclosed in Japanese Patent Application Unexamined Publication No. Sho. 62-140018. After execution of step S12, it is judged in step S13 whether the designation of the route positions has been completed, which is to be instructed by key manipulation of the input unit 21. If the judgment is negative, "1" is added to the variable m in step S14, and the process returns to step S8 to repeat the above operation. If the judgment is affirmative, on the other hand, the CPU 7 sets the position setting flag at "1" in step S15, and completes the routine. The variable m at the time of the process completion represents the number of the route positions.

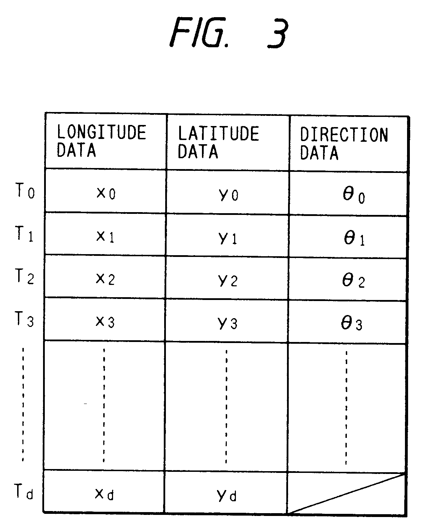

As a result of execution of the route setting routine, a position setting data table as shown in Fig. 3 is stored in the RAM 9, which table contains the longitude data, latitude data and direction data with respect to the start position TO, route positions T1, T2, T3, ...., and destination Td. No direction data of the destination Td is stored in the RAM 9 because it does not exist.

In the above route setting routine, the direction is calculated based on the longitude and latitude data of two positions. As an alternative, it may be calculated in the following manner: displaying, at a route position, an arrow indicating a direction, rotating the arrow by a predetermined angle every time a predetermined key of the input unit 21 is manipulated, and storing into the RAM 9 as direction data a direction at a certain angle at the time of manipulating a "set" key (not shown) of the input unit 21. Further, instead of storing the direction data into the RAM 9, direction-indicating pattern data, which is used to actually indicate a direction, may be stored into the RAM 9 after its calculation according to the direction data.

Although in the above route setting routine, the longitude and latitude data of the respective positions are obtained from the map data stored in the CD-ROM, those data may be input by a user's key manipulation. Further, in steps S2, S5 and S9 in which it is determined whether a position has been designated, the following step may be added. That is, if a position has not be designated, it may be judged whether previous inputs should be changed, and such change may be effected upon request.

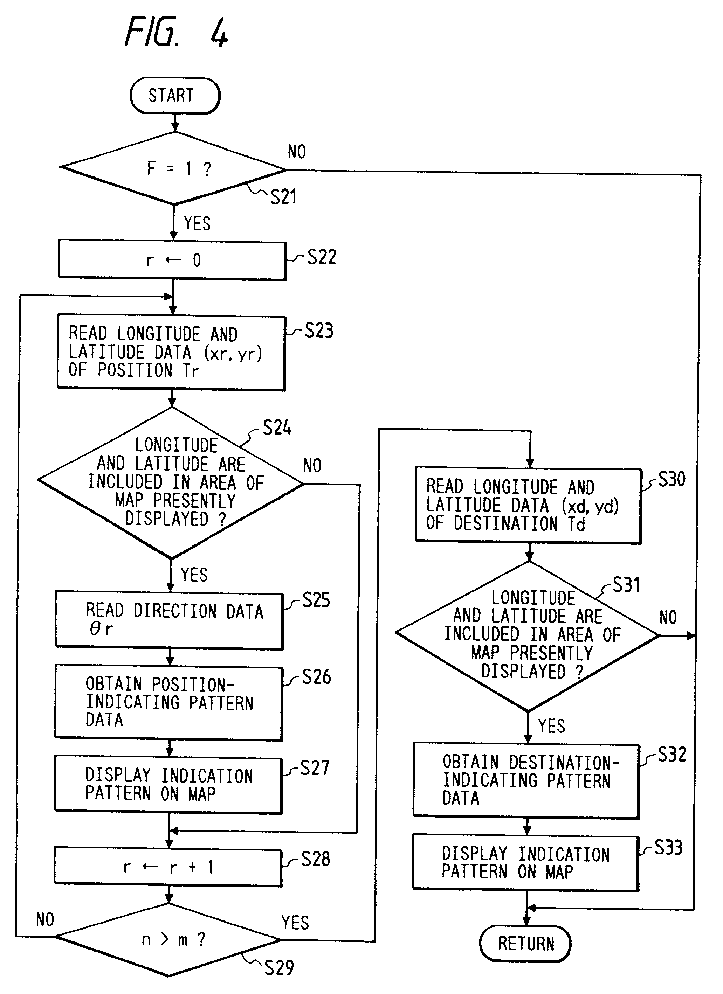

Next, an operation of indicating a start position, route positions and destination, which is performed by the CPU 7, is described in terms of a position setting routine shown in a flowchart of Fig. 4. This position indicating routine is executed as a subroutine of the above-mentioned main routine.

In the position indicating routine, in step S21 the CPU 7 first judges whether the position setting flag F is equal to "1". If F = 0, which means that longitude and latitude data and direction data of the respective positions have not yet been written into the position setting data table of the RAM 9, the CPU 7 immediately finishes the execution of the present routine. If F = 1, which means that longitude and latitude data and direction data of the respective positions have already been written into the position setting data table of the RAM 9, the CPU 9 sets a variable r at "0" in step S22, reads out longitude and latitude data (xr, yr) of a position Tr of the position setting data table in step S23, and judges in step S24 whether the longitude and latitude represented by the data (xr, yr) are included in the area of a map which is presently displayed by execution of the main routine. If the judgment is affirmative, the CPU 7 reads out the direction data $\theta r$ from its memory position of the position setting data table in step S25, and obtains position-indicating pattern data corresponding to the direction data $\theta r$ in step S26. A collection of position-indicating pattern data representing discrete angles having predetermined intervals is stored in advance in the ROM 8 in the form of data table, and data corresponding to the direction data $\theta r$ is read out. Upon obtaining the direction-indicating pattern data, in step S27 the CPU 7 provides the longitude and latitude data (xr, yr) and the direction-indicating pattern data to the graphic controller 19. As a result, an indication patten according to the direction-indicating pattern data is displayed on the display 17 at a position on the map which corresponds to the longitude and latitude data (xr, yr).

After execution of step S27, the CPU 7 adds "1" to the variable r in step S28, and then judges whether the variable r is larger than the number of the route positions m in step S29. If $r \leqq m$, the process returns to step S23. If r > m, the CPU 7 reads out the longitude and latitude data (xd, yd) of the destination Td of the position indicating data table in step S30, and in step S31 judges whether the longitude and latitude are included in the area of a map presently displayed by execution of the main routine. If the judgment is affirmative, in step S32 the CPU obtains destination-indicating pattern data by reading it from the ROM 8. Upon obtaining the destination-indicating pattern data, in step S33 the CPU 7 provides the longitude and latitude data (xd, yd) and the destination-indicating pattern data to the graphic controller 19. As a result, an indication pattern according to the destination-indicating pattern data is displayed on the display 17 at a position on the map which corresponds to the longitude and latitude data (xd, yd).

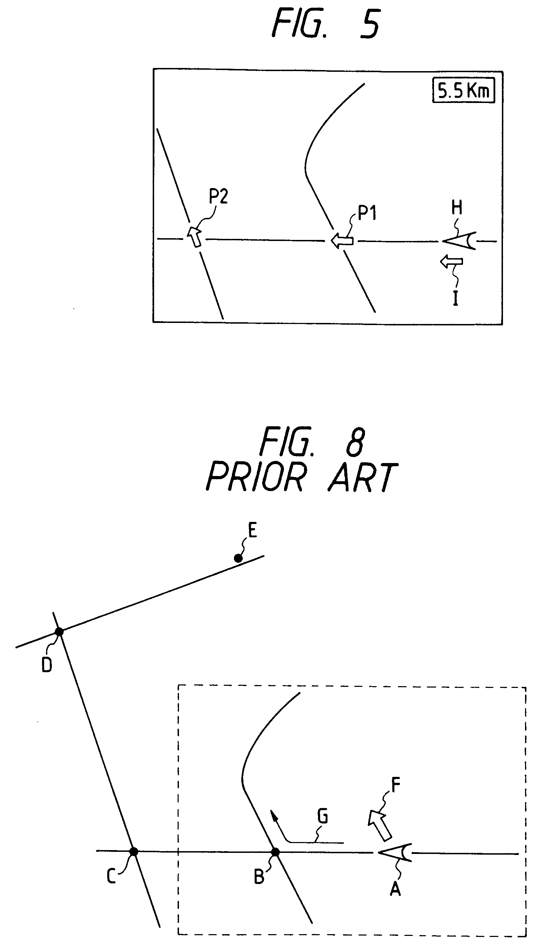

For example, as shown in Fig. 5, direction-indicating patterns, i.e., arrows P1 and P2 are displayed at the respective route positions on a map which includes an own vehicle position H. The arrows P1, P2 indicate the directions which should be followed by the own vehicle at the respective route positions.

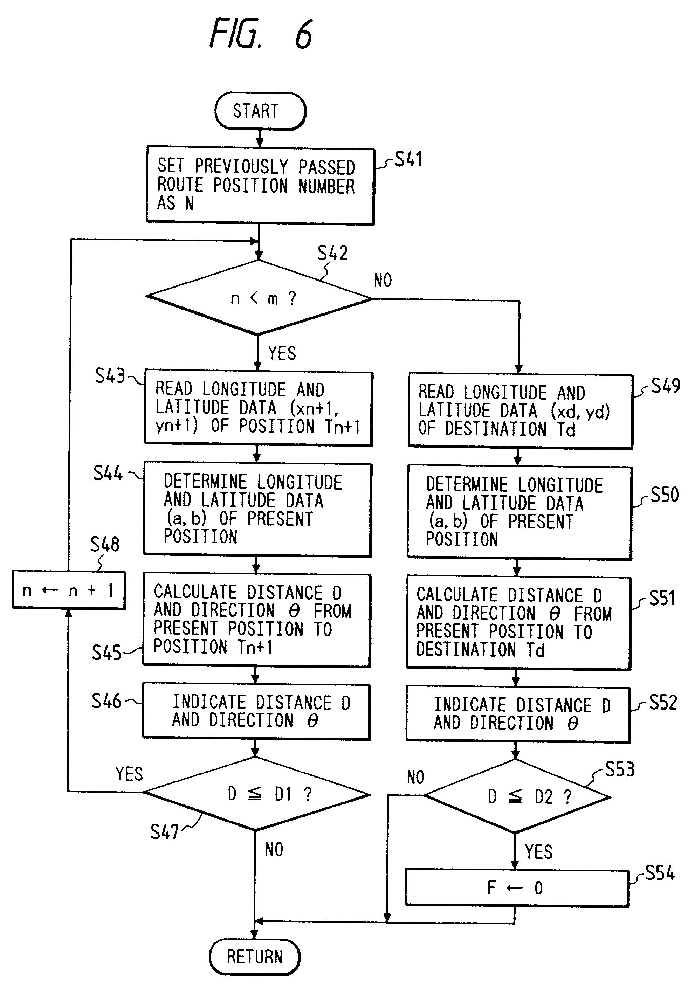

Next, an operation of displaying a direction to be followed by a vehicle, which is performed by the CPU 7, is described in terms of a guidance indication routine shown in a flowchart of Fig. 6. This guidance indication routine is executed as a subroutine of the above-mentioned main routine.

In the guidance indication routine of Fig. 6, in step S41 the CPU 7 first sets a previously passed route position number as a variable n, i.e., sets a route position Tn. At a time immediately after departure, the variable n is set at "0", that is, a start position TO is set automatically or by manual operation. The variable n is changed is step S48 described below. As described above, the route positions have been defined with the order of T1, T2, T3, .... going from the start position TO toward the destination Td. After the position Tn is set, it is judged in step S42 whether the variable n is smaller than the number of the route positions m. If n < m, the CPU 7 reads out, in step S43, longitude data xn+1, latitude data yn+1 and direction data θn+1 of the position Tn+1 from the RAM 9, and determined longitude and latitude data (a, b) of the vehicle present position in step S44. Then, the CPU 7 calculates, in step S45, a distance D and a direction θ from the present position to the position Tn+1 based on the longitude and latitude data (a, b) and (xn+1, yn+1), and makes the display 17 indicate the calculated distance D and direction θ in step S46. More specifically, the CPU 7 provides the graphic controller 19 with the data representing the distance D and direction θ from the present position to the position Tn+1, and the graphic controller 19 produces image data by superposing these data on map data of the graphic memory 18 and provides the resultant image data to the display controller 20. As a result, the distance D and direction θ are indicated on the display 17 together with a map. For example, the distance D is indicated simply as a certain value, and the direction θ is indicated on the map in the form of a mark different from a mark representing the running direction of the own vehicle. After execution of step S46, it is judged in step S47 whether the calculated distance D is smaller than or equal to a predetermined value DI. If D ≦ D1, judging the vehicle has already reached the position Tn+1, the variable n is increased by one in step S48, and the process returns to step S42. If D > D1, the execution of the present routine is finished.

If it is judged in step S42 that n is larger than or equal to m, which means that the vehicle has passed the route position Tm and is heading for the destination Td, the CPU 7 reads out, in step S49, the longitude and latitude data (xd, yd) of the destination Td, and determines the longitude and latitude data (a, b) of the vehicle present position in step S50. Then, the CPU 7 calculates, step S51, a distance D and a direction θ from the present position to the destination Td based on the longitude and latitude data (a, b) and (xd, yd), and makes the display 17 indicate the calculated distance D and direction θ in step S52 in the same manner as in step S46. After execution of step S52, it is judged in step S53 whether the calculated distance D is smaller than or equal to a predetermined value D2. If D ≦ D2, judging that the vehicle has already reached the destination Td, in step S54 the CPU 7 resets the position setting flag F to "0" and finishes the execution of the routine. If D > D2, the execution of the routine is immediately finished.

By repeatedly executing the guidance indication routine, as shown in Fig. 5, a distance from the present position H of the own vehicle to the next route position is indicated at the top-right corner, and a direction toward the next route position is indicated by arrow I in the vicinity of the own vehicle position H.

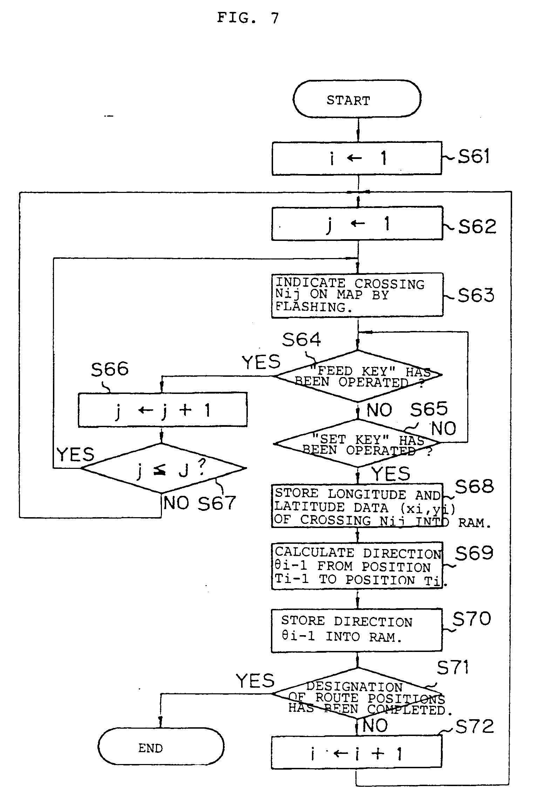

Returning to the route setting routine of Fig. 2, the route positions are arbitrarily set by a user. As an alternative, route positions may be selected by a user, for instance, by indicating crossings from a start position by sequentially flashing those. Fig. 7 shows an example of such a routine to be substituted for the part for designating route positions in the route setting routine of Fig. 2.

In the routine shown in Fig. 7, after designating the start position TO and the destination Td as shown in Fig. 2, the CPU 7 sets a variable i at "1" in step S61, sets a variable j at "1" in step S62, and indicates a crossing Nij by flashing on a map shown on the display 17 in step S63. It is assumed that the crossing Nij is close to a position Ti-1, and that J represents a total number of crossings. Then, it is judged in step S64 whether a "feed" key (not shown) has been operated. If the judgment is negative, the CPU 7 judges in step S65 whether a "set" key of the input unit 21,has been operated. If the feed key has been operated, on the other hand, the CPU 7 adds "1" to the variable j in step S66, and judges in step S67 whether the variable j is smaller than or equal to the number of crossings J. If j ≦ J, the process returns to step S63 to indicate a new crossing Nij close to the position Ti-1. If j > J, judging that all the crossings close to the position Ti-1 have already been indicated, the process returns to step S62 to again indicate these crossings from the start.

If it is judged in step S65 that the set key has not been operated, the process returns to step S64. On the other hand, it has been judged that the set key has been operated, in step S68 the CPU 7 obtains from the map data longitude and latitude data (xi, yi) of the crossing Nij being indicated, and stores that data into the RAM 9 as longitude and latitude data of the route position Ti. Then, the CPU calculates, in step S69, direction θi-1 from the position Ti-1 to Ti based on the longitude and latitude data (xi, yi) and (xi-1, yi-1), and stored the direction θi-1 into the RAM 9 in step S70. Then the CPU 7 judges in step S71 whether the designation of route positions has been completed. If the judgment is negative, the CPU 7 adds "1" to the variable i in step S72, and the process returns to step S62 to repeat the above operation. If the designation of route positions has been completed, the present routine is finished.

As described in the foregoing, according to the vehicular navigation apparatus of the invention, direction data indicating a direction to be followed by a vehicle at a route position is obtained, and stored in a memory in association with coordinate data of the route position. The coordinate data and direction data are read from the memory while a map is shown on a display, to indicate the direction on the display in the form of a pattern according to the direction data at a position on the map which represents the coordinate data. Since a direction to the next route position (or destination) is indicated at a route position displayed on the display, even in the case where only one route position on a route to a destination is displayed in an area including the own vehicle position, appropriate guidance indication can be provided at that only one route position being displayed. Therefore, following the guidance indication, a driver can drive toward the destination without taking an erroneous direction.

**Claims**

1. A vehicular navigation apparatus comprising:

   means (5) for receiving data $(x_d,y_d)$ indicating a destination (Td) and data $(x_m,y_m)$ indicating at least one route position (Tm) located on a route from a start position (T0) to the destination;

   means (5,21) for obtaining data indicating directions $(\theta_1...\theta_m)$ to be followed at the respective route positions to reach the next route position (Tm) or destination (Td);

   means (9) for storing the direction data in association with the respective route position data; and

   means (5,17-20) for displaying (Pm) the directions $(\theta_m)$ at the respective route positions on a map picture based on the stored direction data and the route position data.

2. The apparatus of claim 1, wherein the obtaining means comprises means (21) for receiving the route position data from a user.

3. The apparatus of claim 1, wherein the obtaining means (5,21) calculates the route positions based on the destination data and the route position data.

# FIG. 1

DIRECTION SENSOR 1

ANGULAR VELOCITY SENSOR 2

DISTANCE SENSOR 3

GPS 4

SYSTEM CONTROLLER 5

INTERFACE 6

CPU 7

ROM 8

RAM 9

CD-ROM DECODER 11

CD-ROM DRIVER 10

INPUT UNIT 21

DISPLAY UNIT 16

DISPLAY CONTROLLER 20

GRAPHIC CONTROLLER 19

GRAPHIC MEMORY 18

17

BATTERY 12

REGULATOR 13

RESPECTIVE COMPONENTS

7

FIG. 2

START

REQUEST DESIGNATION OF START POSITION TO — S1

DESIGNATED ? — S2
NO / YES

STORE LONGITUDE AND LATITUDE DATA OF DESIGNATED POSITION TO INTO RAM AS (x0, v0) — S3

REQUEST DESIGNATION OF DESTINATION Td — S4

DESIGNATED ? — S5
NO / YES

STORE LONGITUDE AND LATITUDE DATA OF DESIGNATED POSITION Td INTO RAM AS (xd, yd) — S6

m ← 1 — S7

REQUEST DESIGNATION OF ROUTE POSITION Tm — S8

DESIGNATED ? — S9
NO / YES

A

STORE LONGITUDE AND LATITUDE DATA OF DESIGNATED POSITION Tm INTO RAM AS (xm, ym) — S10

CALCULATE DIRECTION θm-1 FROM OPSITION Tm-1 TO POSITION Tm — S11

STORE POSITION θm-1 INTO RAM — S12

DESIGNATION OF ROUTE POSITIONS HAS BEEN COMPLETED ? — S13
NO / YES

m ← m + 1 — S14

F ← 1 — S15

END

8

# FIG. 3

| | LONGITUDE DATA | LATITUDE DATA | DIRECTION DATA |
|---|---|---|---|
| $T_0$ | $x_0$ | $y_0$ | $\theta_0$ |
| $T_1$ | $x_1$ | $y_1$ | $\theta_1$ |
| $T_2$ | $x_2$ | $y_2$ | $\theta_2$ |
| $T_3$ | $x_3$ | $y_3$ | $\theta_3$ |
| ⋮ | ⋮ | ⋮ | ⋮ |
| $T_d$ | $x_d$ | $y_d$ | |

EP 0 508 822 A2

# FIG. 4

START

S21: F = 1 ?
- NO →
- YES ↓

S22: r ← 0

S23: READ LONGITUDE AND LATITUDE DATA (xr, yr) OF POSITION Tr

S24: LONGITUDE AND LATITUDE ARE INCLUDED IN AREA OF MAP PRESENTLY DISPLAYED ?
- NO →
- YES ↓

S25: READ DIRECTION DATA $\theta r$

S26: OBTAIN POSITION-INDICATING PATTERN DATA

S27: DISPLAY INDICATION PATTERN ON MAP

S28: r ← r + 1

S29: n > m ?
- NO
- YES

S30: READ LONGITUDE AND LATITUDE DATA (xd, yd) OF DESTINATION Td

S31: LONGITUDE AND LATITUDE ARE INCLUDED IN AREA OF MAP PRESENTLY DISPLAYED ?
- NO →
- YES ↓

S32: OBTAIN DESTINATION-INDICATING PATTERN DATA

S33: DISPLAY INDICATION PATTERN ON MAP

RETURN

10

# FIG. 5

# FIG. 8
# PRIOR ART

# FIG. 6

```
         ( START )
            │
            ▼
┌───────────────────────┐
│ SET PREVIOUSLY PASSED │──── S41
│ ROUTE POSITION NUMBER │
│ AS N                  │
└───────────────────────┘
            │
            ▼
        ╱ S42 ╲
      ╱  n < m ? ╲──── NO ─────────────────┐
       ╲        ╱                           │
        ╲──────╱                            │
            │ YES                           │
            ▼                               ▼
┌───────────────────────┐      ┌───────────────────────┐
│ READ LONGITUDE AND    │ S43  │ READ LONGITUDE AND     │ S49
│ LATITUDE DATA (xn+1,  │      │ LATITUDE DATA (xd, yd) │
│ yn+1) OF POSITION Tn+1│      │ OF DESTINATION Td      │
└───────────────────────┘      └───────────────────────┘
            │                               │
            ▼                               ▼
┌───────────────────────┐      ┌───────────────────────┐
│ DETERMINE LONGITUDE   │ S44  │ DETERMINE LONGITUDE    │
│ AND LATITUDE DATA     │      │ AND LATITUDE DATA      │ S50
│ (a, b) OF PRESENT     │      │ (a, b) OF PRESENT      │
│ POSITION              │      │ POSITION               │
└───────────────────────┘      └───────────────────────┘
            │                               │
            ▼                               ▼
┌───────────────────────┐      ┌───────────────────────┐
│ CALCULATE DISTANCE D  │      │ CALCULATE DISTANCE D   │ S51
│ AND DIRECTION θ FROM  │      │ AND DIRECTION θ FROM   │
│ PRESENT POSITION TO   │      │ PRESENT POSITION TO    │
│ POSITION Tn+1         │ S45  │ DESTINATION Td         │
└───────────────────────┘      └───────────────────────┘
            │                               │
            ▼                               ▼
┌───────────────────────┐      ┌───────────────────────┐
│ INDICATE DISTANCE D   │ S46  │ INDICATE DISTANCE D    │ S52
│ AND DIRECTION θ       │      │ AND DIRECTION θ        │
└───────────────────────┘      └───────────────────────┘
            │                               │
            ▼                               ▼
        ╱        ╲                      ╱ S53 ╲
  YES ╱ D ≦ D1 ?  ╲               NO  ╱ D ≦ D2 ? ╲
      ╲           ╱                    ╲         ╱
       ╲ S47     ╱                      ╲───────╱
        ╲───────╱                           │ YES
            │ NO                            ▼
            │                     ┌───────────────────────┐
            │                     │      F ← 0            │ S54
            │                     └───────────────────────┘
            │                               │
            ▼                               │
        ( RETURN )◄──────────────────────────
```

```
┌───────────────┐
│ n ← n + 1     │ S48
└───────────────┘
```

FIG. 7

```
                        ┌──────────────┐
                        │    START     │
                        └──────┬───────┘
                               │
                        ┌──────┴───────┐
                        │   i ← 1      │──S61
                        └──────┬───────┘
                               │
        ┌──────────────────────┼──────────────────────────┐
        │               ┌──────┴───────┐                   │
        │               │   j ← 1      │──S62              │
        │               └──────┬───────┘                   │
        │                      │                           │
        │            ┌─────────┴──────────┐                │
        │            │ INDICATE CROSSING  │──S63           │
        │            │ Nij ON MAP BY      │                │
        │            │ FLASHING.          │                │
        │            └─────────┬──────────┘                │
        │                 S64  │                           │
        │      YES        ╱────┴────╲                      │
        │  ┌──────────────  "FEED KEY" HAS ────────────────┤
        │  │              ╲ BEEN OPERATED? ╱               │
  ┌─────┴──────┐          ╲──────┬──────╱                  │
  │ j ← j + 1  │──S66         NO │  S65                    │
  └─────┬──────┘             ╱───┴───╲         NO          │
        │                   ╱ "SET KEY" HAS ╲──────────────┘
    YES │                   ╲ BEEN OPERATED?╱
   ╱────┴────╲               ╲──────┬──────╱
  ╱  j ≤ J ?  ╲                 YES │
  ╲───────────╱          ┌──────────┴──────────┐
       │                 │ STORE LONGITUDE AND │──S68
    NO  S67              │ LATITUDE DATA (xi,yi)│
                         │ OF CROSSING Nij INTO RAM.│
                         └──────────┬──────────┘
                         ┌──────────┴──────────┐
                         │ CALCULATE DIRECTION │──S69
                         │ θi-1 FROM POSITION  │
                         │ Ti-1 TO POSITION Ti.│
                         └──────────┬──────────┘
                         ┌──────────┴──────────┐
                         │ STORE DIRECTION     │──S70
                         │ θi-1 INTO RAM.      │
                         └──────────┬──────────┘
                                    │  S71
              YES            ╱───────┴────────╲
       ┌───────────────────  DESIGNATION
       │                   ╲ OF ROUTE POSITIONS
       │                    HAS BEEN COMPLETED. ╱
  ┌────┴─────┐              ╲──────┬──────────╱
  │   END    │                  NO │   S72
  └──────────┘              ┌──────┴───────┐
                            │   i ← i + 1  │
                            └──────────────┘
```